# EUROPÄISCHE PATENTSCHRIFT

(11) **EP 4 003 782 B1**
(45) Veröffentlichungstag und Bekanntmachung des Hinweises auf die Patenterteilung: **18.10.2023**
(21) Anmeldenummer: 20732159.7
(22) Anmeldetag: 05.06.2020
(51) Int. Cl.: B60P 7/08

(54) **VERFAHREN ZUR ÜBERWACHUNG DER LADEPOSITION UND DER AUFLAGEKRAFT EINES TRANSPORTGUTS**
METHOD FOR MONITORING THE LOADING POSITION AND THE BEARING FORCE OF AN ITEM TO BE TRANSPORTED
PROCÉDÉ POUR CONTRÔLER LA POSITION DE CHARGEMENT ET LA FORCE D'APPUI D'UN ARTICLE À TRANSPORTER

(30) Priorität: 31.07.2019 DE 102019211419
(43) Veröffentlichungstag der Anmeldung: 01.06.2022
(73) Patentinhaber: ContiTech Antriebssysteme GmbH, 30165 Hannover (DE)
(72) Erfinder: FREIHEIT, Philipp, 30419 Hannover (DE); GROFFMANN, Lena, 30419 Hannover (DE)
(74) Vertreter: Continental Corporation
(86) Internationale Anmeldenummer: PCT/EP2020/065578
(87) Internationale Veröffentlichungsnummer: WO 2021/018442

(56) Entgegenhaltungen:
- EP-A1- 3 453 568
- CA-A1- 2 377 296
- DE-A1-102014 205 825
- DE-U1-202016 105 855
- US-B1- 9 228 911

## Beschreibung

Die Erfindung betrifft ein Verfahren zur Überwachung der Ladeposition und der Auflagekraft eines Transportguts auf einer Ladefläche in oder auf einem Fahrzeug, wobei das Transportgut mit Spannmitteln, vorzugsweise Spanngurten auf der Ladefläche verzurrt wird.

Im Güterverkehr werden Transportgüter in vielen Fällen auf einer Ladefläche mit Spanngurten gesichert. So wird beispielsweise die Ladung auf der Ladefläche eines Lastkraftwagens mit Hilfe von Spanngurten fixiert, um ein Verrutschen zu verhindern. Zusätzlich können die Ladeflächen mit Antirutschmatten versehen werden, wodurch der Reibungskoeffizient zwischen Transportgut und dem Untergrund erhöht und ein Verrutschen der Ladung verhindert werden sollen. Mittels Spanngurten wird dabei eine zur Gewichtskraft zusätzliche Normalkraft aufgebracht.

Für die ordnungsgemäße Ladungssicherung gibt es Normen und Richtlinien. Die Einhaltung dieser Vorschriften liegt in aller Regel im Verantwortungsbereich des Stauers bzw. des Fahrers und kann daher von menschlichen Unzulänglichkeiten beeinflusst sein. Während des Transportes unterliegt zudem das Transportgut Veränderungen seiner Spann- und Auflagesituation, etwa durch unerwartete Ereignisse wie Vollbremsungen, starken Beschleunigungen etc. Es besteht dann z.B. die Gefahr einer nachlassenden Vorspannkraft in den Zurrgurten des Transportguts, was eine Beschädigung oder einen Unfall in Folge einer sich bewegenden Ladung nach sich ziehen kann. Zur Kontrolle der korrekten Spannkraft in Zurrgurten gibt es natürlich mechanische und vereinzelt auch digitale Überwachungssysteme. Letztere sind jedoch nicht weit verbreitet, relativ teuer und erfordern einen zusätzlichen Installations- und Handhabungsaufwand. Eine Überprüfung der sicheren Fixierung der Transportgüter erfolgt daher in aller Regel nur durch die Kontrolle der Spanngurte während einer Fahrtunterbrechung.

Andererseits existieren digitale Überwachungssysteme auf Basis von Kameras und GPS-Sensoren zur Positionsbestimmung für größere Transportgüter, wie etwa Container. Letztere sollen jedoch im Wesentlichen Diebstähle verhindern und können nicht die Position der Transportgüter im Fahrzeug oder auf dem Fahrzeug überwachen. Diese Systeme dienen also nicht der Sicherheitsüberwachung gegen Verrutschen.

Die Überprüfung der sicheren Lagerung von Transportgütern im Fahrzeug und damit auch der Überprüfung der Spannung von Spanngurten ist jedoch eine wesentliche Voraussetzung, um Unfälle zu vermeiden und Transporte sicher für alle Verkehrsteilnehmer durchzuführen.

In anderen Fachgebieten sind Verfahren / Messverfahren zur stationären Ermittlung von Spannungen in Zugmitteln bekannt, beispielsweise zur Messung der Vorspannkraft von Antriebsriemen von Maschinen oder Motoren. Dabei handelt es sich im Wesentlichen auf mechanische, akustische und optische Verfahren. Für diese Verfahren sind spezielle und aufwendig gebaute Messgeräte bzw. Vorrichtungen notwendig, die temporär dem Antriebsriemen an der Maschine zugeführt und beim Betrieb wieder entfernt werden müssen.

Dokument DE 20 2016 105855 U1 offenbart ein gattungsgemäßes Verfahren zur Überwachung der Ladeposition und der Auflagekraft eines Transportguts auf einer Ladefläche in oder auf einem Fahrzeug.

Vor dem Hintergrund dieses Standes der Technik bestand für die Erfindung die Aufgabe, ein Verfahren vorzuschlagen, das es ermöglicht, eine permanente Ladungssicherung und leicht zu handhabende Überwachung des Transportguts durchzuführen. Weiterhin bestand für die Erfindung die Aufgabe, den Fahrzeugführer oder auch eine externe Kontrollstelle ständig über den Sicherungszustand der Ladung zu informieren und bei Verrutschen der Ladung oder nachlassender Spannung der Spanngurte automatisch eine Warnung auszugeben, insbesondere eine Warnung für den Fahrzeugführer.

Gelöst wird diese Aufgabe durch die Merkmale des unabhängigen Anspruchs 1.

Dabei ist auf der Ladefläche eine Matte oder Unterlage vorgesehen, vorzugsweise ausgebildet als Antirutschmatte aus Elastomermaterial, die eine Vielzahl von zweidimensional positionsgenau bestimmbaren Sensoren zur Erfassung einer ersten Messgröße aufweist, die mit der auf die Matte wirkende Auflagekraft korreliert.

Die Sensoren und Sensoreinrichtungen wirken weiterhin mit Einrichtungen zur Übermittlung, vorzugsweise drahtlosen Übermittlung der Messgrößen an eine zentrale, elektronischen Recheneinheit zusammen, in der die Start- und Ausgangswerte der ersten Messgrößen und ihre anfängliche Korrelation untereinander gespeichert werden. Letztlich werden danach in zeitlichen Abständen wiederholt die ersten Messgrößen erneut erfasst und abgespeichert, wobei die jeweils aktuellen ersten positionsgenau bestimmbaren Messgrößen mit ihren Start- und Ausgangswerten sowie ihre aktuelle Korrelation untereinander mit ihrer anfänglichen Korrelation untereinander verglichen und bei Überschreitung von vorgegebenen Schwellen- oder Differenzwerten ein Alarm ausgelöst wird.

Durch das erfindungsgemäße Verfahren ist es möglich, eine Gewichtsmessung, eine Gewichtsverteilung und eine Überwachung der Veränderung der Auflagekraft, wie sie z.B. durch nachlassende Vorspannkraft der Zurrgurte entstehen kann, und eine Lageermittlung zu kombinieren und damit den genauen Auflagezustand des Transportguts zu ermitteln. Dabei ist es je nach Anzahl der Sensoren auch möglich, eine lokale Auflösung der Lastverteilung zu ermitteln bzw. zu berechnen. So kann z.B. auch die Größe des Ladegutes (Länge x Breite) ermittelt werden.

Zur Korrelation der Messgrößen mit der Auflagekraft wird üblicherweise, wie bei anderen Messverfahren auch, der Messgröße bzw. dem Ausgabewert des Sensors durch Kalibrierung eine Gewichtskraft, Zugkraft oder eine Masse zugeordnet und in einem Mikrocontroller ausgewertet. Die Messgröße kann dabei zum Beispiel eine Spannung, ein

Strom, eine Kapazität oder Widerstandswert sein.

Durch Hinterlegen eines Berechnungsalgorithmus in einem z.B. in der zentralen, elektronischen Recheneinheit vorgesehenen Mikrocontroller kann in Abhängigkeit des Gewichtes und der Geometrie bzw. Auflagefläche der Ladung auf der Matte auch die optimale Niederzurrkraft für die der Ladung ermittelt werden. Beim Verzurren der Ladung kann abhängig von den Messgrößen durch optische Anzeigen auch eine Hilfe für das korrekte Einstellen der Vorspannkraft gegeben werden, z.B. durch Anzeige des Soll- und Ist-Wertes bei der Ladungssicherung/Verladung durch eine Ampel.

Die Einrichtungen zur vorzugsweisen drahtlosen Übermittlung der Messgrößen an die zentrale Recheneinheit kann z.B. durch Funk im Gigahertzbereich, etwa über Bluetooth erfolgen. Dasselbe gilt für die Übertragung der Messgrößen an eine Anzeigeeinheit (Display, Handy etc.) oder an eine andere Telemetrieschnittstelle. Damit kann auch jederzeit aus der Ferne die Überwachung des Ladungszustandes des Transportguts erfolgen.

Auf diese Weise ist es möglich, beispielsweise für den Fahrzeugführer im Führerhaus, die ermittelten Messgrößen als Ladungsparameter abzufragen. Bei einem Verrutschen des Transportgutes oder bei einem veränderten Gurtspannungszustand ist somit ein schnelles Eingreifen möglich.

Idealerweise wird die als Antirutschmatte ausgebildete Matte oder Unterlage fest im Laderaum oder auf der Ladefläche verlegt, um einen sich wiederholenden Installationsaufwand durch Schnittstellen zwischen Mikrocontroller und Sensorik zu vermeiden.

Die Sensorik kann auf unterschiedlichen Prinzipien beruhen. Eine vorteilhafte Weiterbildung des Verfahrens besteht darin, dass die Sensoren zur Erfassung der ersten Messgröße als in der Fläche der Matte verteilte einzelne Druck- oder Kraftsensoren ausgebildet sind, vorzugsweise als kapazitive oder resistive Sensoren. Damit lassen sich Standardbauteile für das Verfahren verwenden, die lediglich noch miteinander verkabelt werden müssen. Dasselbe gilt für ein weiteres vorteilhaftes Verfahren, bei dem die Sensoren zur Erfassung der ersten Messgröße als in der Fläche der Matte verteilte einzelne piezoelektrische Sensoren ausgebildet sind.

Eine weitere vorteilhafte Ausbildung des Verfahrens besteht darin, dass die Matte oder Unterlage aus flexiblem, elastomeren Materialien aufgebaut und als Messanordnung nach Anspruch 9 gemäß DE 102014205825 A1 ausgebildet ist. Eine solche eine Messanordnung zur Erfassung einer Druckverteilung ist mit einer Sensoranordnung versehen, die durch die Verwendung von elektrisch leitfähigem Elastomermaterial als Sensormaterial zwischen Elektroden bzw. Kontaktierungselementen gekennzeichnet ist, wobei jeweils eine Anzahl von ersten Kontaktierungselemente senkrecht zu einer Anzahl von zweiten Kontaktierungselemente angeordnet ist, und beinhaltet eine Messeinheit, welche eingerichtet ist, eine elektrische Leitfähigkeit zwischen den ersten Kontaktierungselementen und dem zweiten Kontaktierungselementen der Sensoranordnung einzeln an den Kreuzungspunkten oder auch insgesamt zu erfassen.

Eine weitere vorteilhafte Ausbildung des Verfahrens besteht darin, dass die auf das Transportgut wirkenden Spannmittel ebenfalls Sensoreinrichtungen aufweisen, deren Sensoren nach dem Verzurren des Transportguts eine zweite Messgröße erfassen, die mit der Spannkraft des jeweiligen Spannmittels korreliert, wobei die Sensoren und Sensoreinrichtungen mit Einrichtungen zur Übermittlung, vorzugsweise drahtlosen Übermittlung der Messgrößen an die zentrale, elektronischen Recheneinheit zusammenwirken, in der die Start- und Ausgangswerte der zweiten Messgrößen und ihre anfänglich Korrelation untereinander sowie zu den ersten Messgrößen gespeichert werden, wobei danach in zeitlichen Abständen wiederholt die ersten und zweiten Messgrößen erneut erfasst und abgespeichert werden, wobei die jeweils aktuellen ersten und zweiten Messgrößen mit ihren Start- und Ausgangswerten sowie in Bezug auf ihre anfängliche Korrelation untereinander verglichen und bei Überschreitung von vorgegebenen Schwellen- oder Differenzwerten ein Alarm ausgelöst wird.

Durch die Einbeziehung auch der Spanngurte in den Überwachungsvorgang lässt sich bei einigen Anwendungen eine besonders präzise und vorausschauende Überwachung des Transportguts bzw. Ladeguts erreichen.

Eine weitere vorteilhafte Ausbildung des Verfahrens besteht darin, dass die Sensoren zur Erfassung der zweiten Messgröße als im oder an dem Spannmittel vorgesehene resistive Sensoren ausgebildet sind, vorzugsweise als Dehnungsmessstreifen. Auch hier genießt man den Vorteil der Verwendung von einfachen und jederzeit verfügbaren Standardbauteilen.

Generell kann die Sensorik auf unterschiedlichen Prinzipien beruhen, beispielsweise auch die Verwendung elektrisch aktiver Polymere beinhalten.

So kann beispielsweise nach dem Verzurren des Transportgutes jedes Spannmittel im Bereich einer frei gespannten Länge mit einer separaten Sensoreinrichtung versehen werden, die
- eine Energie- bzw. Stromversorgung beinhaltet,
- einen Schwingungserzeuger sowie einen Sensor zur Messung von Schwingungen oder Beschleunigungen des Spanngurts aufweist,
- die weiterhin mit einer Recheneinheit bzw. einem Mikroprozessor ausgerüstet ist,
- sowie eine mit der zentralen elektronischen Recheneinheit bidirektional kommunizierende Funkeinrichtung aufweist,
wobei nach einer durch den Schwingungserzeuger auf den Spannmittel bzw. auf ein frei gespanntes Teilstück des Spannmittels aufgebrachten im Wesentlichen transversalen Schwingung der Schwingungserzeuger abgeschaltet wird und die Ermittlung der Spannkraft des jeweiligen Spannmittels dadurch erfolgt, dass der Sensor zur Messung von Schwingungen oder Beschleunigungen die mit der der Spannkraft proportionalen Eigenfrequenz des Spannmittels abklingende Schwingung erfasst, wonach aus letzterer in der Recheneinheit mit Hilfe eines Algorithmus dessen aktuell vorliegende Spannkraft berechnet bzw. ermittelt und als Funksignal der Überwachungseinrichtung übermittelt wird.

Eine solche Weiterbildung erlaubt die einfache Verwendung des Verfahrens bei unterschiedlicher Länge der Spannmittel und bei unterschiedlichen Arten des Transportguts.

Eine weitere vorteilhafte Ausbildung des Verfahrens besteht darin, dass in der zentralen elektronischen Recheneinheit Sensoren zur Messung der Fahrzeugbeschleunigungen vorgesehen sind, deren Signale bei Überschreiten vorbestimmter Schwellen- oder Grenzwerte für die Fahrzeugbeschleunigungen die erneute Erfassung der ersten und/oder zweiten Messgrößen sowie deren Abspeicherung und den Vergleich auslösen.

Das ist besonders nützlich zur Detektion und Korrelation von Sonderereignissen, Notbremsungen etc. In solchen Fällen kann dann z. B. eine Abwägung dahingehend erfolgen, ob eine durch eine Fahrsituation, etwa durch eine Bremsung ausgelöstes Verrutschen der Ladung erfolgt ist, wodurch dann unterschiedliche oder nicht im Normbereich befindliche Messgrößen und wirkende Kräfte ermittelt werden.

Eine weitere vorteilhafte Ausbildung besteht darin, dass die Überwachungseinrichtung im Fahrzeug angeordnet ist, vorzugsweise im Führerstand oder Führerhaus und im Sichtfeld eines Fahrzeugführers. Damit kann auf einfache Weise eine Kontrolle erfolgen, insbesondere dann, wenn die aktuellen Messgrößen und/oder ihr Verhältnis zu den Schwellen- oder Grenzwerten auf einem elektronischen Display graphisch dargestellt werden.

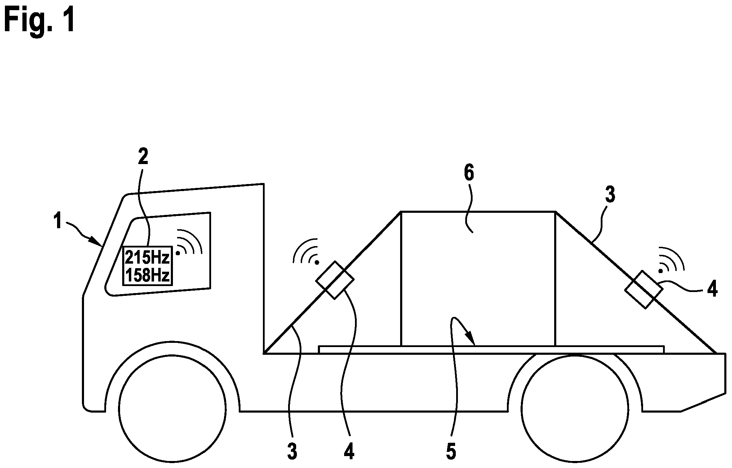

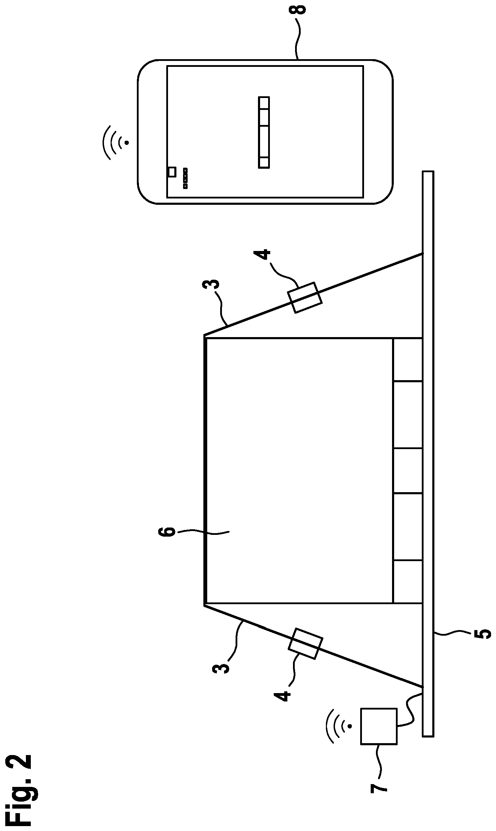

Anhand eines Ausführungsbeispieles soll die Erfindung näher erläutert werden. Die Fig. 1 und Fig. 2 zeigen anhand einfacher Prinzipskizzen die erfindungsgemäße Einrichtung zur Durchführung des Verfahrens zur Überwachung der Ladeposition und der Auflagekraft von mit Spanngurten gesicherten Transportgütern in oder auf Fahrzeugen, wobei die Einrichtung hier mit entsprechenden Sensoren sowohl auf der Matte als auch an den Spanngurten ausgebildet ist.

Dargestellt ist in der Zusammenschau der Fig. 1 und 2 ein System zur Durchführung des erfindungsgemäßen Verfahrens, dass aus eine z.B. im Führerhaus 1 eines Lastkraftwagens angebrachte zentrale und mit einer elektronischen Recheneinheit versehene Überwachungseinrichtung 2 aufweist, die u.a. mit einem hier nicht näher dargestellten Beschleunigungssensor, einer bidirektionalen Funkschnittstelle und mit einem Display versehen ist.

An den Spannmitteln bzw. Spanngurten 3, mit denen eine stückige Ladung 6 auf dem Lastkraftwagen gesichert ist, sind jeweils zugehörige als Dehnungsmessstreifen ausgebildete Sensoreinheiten 4 vorgesehen. Die Sensoren 4 stellen per Funkübertragung eine Verbindung zu der Überwachungseinheit 2 her.

Auf der Ladefläche des Lastkraftwagens ist eine Matte oder Unterlage 5 vorgesehen, die eine Vielzahl von zweidimensional positionsgenau bestimmbaren Sensoren zur Erfassung einer ersten Messgröße aufweist, die mit der auf die Matte wirkende Auflagekraft korreliert, die vom Gewicht der Ladung 6 und von der durch die Spannmittel 4 aufgebrachten Kraft ausgeübt wird. Die einzelnen Sensoren auf oder in der Matte sind hier der Übersichtlichkeit halber nicht dargestellt, sind aber in der Fläche der Matte so verteilt, dass sie ein zweidimensionales Gitter bilden, an dessen Schnittpunkt jeweils einen Sensor angeordnet ist. Die Kantenlänge der einzelnen Gitterstäbe beträgt hierbei 20 cm.

Wie oben bereits dargestellt, weisen die auf das Transportgut wirkenden Spannmittel 3 Sensoreinrichtungen 4 auf, deren Sensoren, hier ausgebildet als Dehnungsmessstreifen, nach dem Verzurren des Transportguts eine zweite Messgröße erfassen, die mit der Spannkraft des jeweiligen Spannmittels korreliert.

Die Sensoren und Sensoreinrichtungen wirken zusammen mit Einrichtungen 7 zur drahtlosen Übermittlung der Messgrößen an die zentrale, elektronischen Recheneinheit 2 oder auch an andere externe Geräte, wie etwa Mobiltelefone etc., die mit entsprechenden Programmen/Applikationen (Apps) versehen sind. Fig. 2 stellt dies noch einmal für eine beliebige Ladefläche dar.

In den Recheneinheiten oder externen Geräten werden die Start- und Ausgangswerte der ersten Messgrößen und ihre anfängliche Korrelation zu den zweiten Messgrößen gespeichert. Im nächsten Schritt werden in zeitlichen Abständen wiederholt die ersten und zweiten Messgrößen erneut erfasst und abgespeichert werden, wobei die jeweils aktuellen ersten positionsgenau bestimmbaren Messgrößen mit ihren Start- und Ausgangswerten sowie die aktuelle Korrelation zwischen ersten und zweiten Messgrößen untereinander in Bezug auf ihre anfängliche Korrelation untereinander verglichen und bei Überschreitung von vorgegebenen Schwellen- oder Differenzwerten ein Alarm ausgelöst wird.

Die Vorteile, die sich durch das erfindungsgemäße Verfahren gegeben sind vielfältig. So lässt sich eine Überladung eines LKW durch Erfassung des Gesamtgewichtes der Ladung vermeiden und eine nachlassende Vorspannung in den oder in einem der Spannmittel(n) überwachen und ggf. ein Warnsignal an den Fahrer ausgeben.

Ermöglicht wird auch eine Erfassung der Lastverteilung im Laderaum und eine korrekte Einstellung der Zurrkraft in Abhängigkeit des Gewichtes und der Geometrie der Ladung. Die Häufigkeit eines Anhaltens zur Überprüfung der Ladungssicherung durch den Fahrer kann verringert werden. Darüber hinaus ergibt sich eine deutliche Zeitersparnis bei Verkehrskontrollen, da der Zustand der Ladungssicherung unmittelbar über die Anzeigeeinheit überprüft werden kann. Natürlich ist das Verfahren bei allen Arten von Verkehrsmittel anwendbar, so beispielsweise bei Ladegut in Zügen, in Schiffen oder in Flugzeugen.

### Bezugszeichenliste

- 1: Führerhaus eines LKW
- 2: zentrale, elektronischen Recheneinheit
- 3: Spannmittel
- 4: Sensoreinheit
- 5: Matte / Antirutschmatte mit Sensoren
- 6: stückige Ladung / Stückgut
- 7: Einrichtung zur drahtlosen Übermittlung der Messgrößen
- 8: externes Gerät / Mobiltelefon

## Patentansprüche

1. Verfahren zur Überwachung der Ladeposition und der Auflagekraft eines Transportguts (6) auf einer Ladefläche in oder auf einem Fahrzeug, wobei das Transportgut mit Spannmitteln (3), vorzugsweise Spanngurten auf der Ladefläche verzurrt wird, **dadurch gekennzeichnet, dass**
- auf der Ladefläche eine Matte oder Unterlage (5) vorgesehen ist, die eine Vielzahl von zweidimensional positionsgenau bestimmbaren Sensoren zur Erfassung einer ersten Messgröße aufweist, die mit der auf die Matte wirkende Auflagekraft korreliert,
- dass die Sensoren mit Einrichtungen zur Übermittlung, vorzugsweise drahtlosen Übermittlung der ersten Messgrößen an eine zentrale, elektronischen Recheneinheit (2) zusammenwirken, in der die Start- und Ausgangswerte der ersten Messgrößen und ihre anfängliche Korrelation untereinander gespeichert werden,
wobei danach in zeitlichen Abständen wiederholt die ersten Messgrößen erneut erfasst und abgespeichert werden, wobei die jeweils aktuellen ersten positionsgenau bestimmbaren Messgrößen mit ihren Start- und Ausgangswerten sowie ihre aktuelle Korrelation untereinander mit ihrer anfänglichen Korrelation untereinander verglichen und bei Überschreitung von vorgegebenen Schwellen- oder Differenzwerten ein Alarm ausgelöst wird.

2. Verfahren nach Anspruch 1, bei dem die Sensoren zur Erfassung der ersten Messgröße als in der Fläche der Matte (5) verteilte einzelne Druck- oder Kraftsensoren ausgebildet sind, vorzugsweise als kapazitive oder resistive Sensoren.

3. Verfahren nach Anspruch 1, bei dem die Sensoren zur Erfassung der ersten Messgröße als in der Fläche der Matte (5) verteilte einzelne piezoelektrische Sensoren ausgebildet sind.

4. Verfahren nach einem der Ansprüche 1 bis 3, bei dem die auf das Transportgut wirkenden Spannmittel (3) ebenfalls Sensoreinrichtungen (4) aufweisen, deren Sensoren nach dem Verzurren des Transportguts eine zweite Messgröße erfassen, die mit der Spannkraft des jeweiligen Spannmittels korreliert, wobei die Sensoren und Sensoreinrichtungen mit Einrichtungen zur Übermittlung, vorzugsweise drahtlosen Übermittlung der Messgrößen an die zentrale, elektronischen Recheneinheit (2) zusammenwirken, in der die Start- und Ausgangswerte der zweiten Messgrößen und ihre anfänglich Korrelation untereinander sowie zu den ersten Messgrößen gespeichert werden, wobei danach in zeitlichen Abständen wiederholt die ersten und zweiten Messgrößen erneut erfasst und abgespeichert werden, wobei die jeweils aktuellen ersten und zweiten Messgrößen mit ihren Start- und Ausgangswerten sowie in Bezug auf ihre anfängliche Korrelation untereinander verglichen und bei Überschreitung von vorgegebenen Schwellen- oder Differenzwerten ein Alarm ausgelöst wird.

5. Verfahren nach Anspruch 4, bei dem die Sensoren zur Erfassung der zweiten Messgröße als im oder an dem Spannmittel (3) vorgesehene resistive Sensoren ausgebildet sind, vorzugsweise als Dehnungsmessstreifen.

6. Verfahren nach einem der Ansprüche 1 bis 5, bei dem in der zentralen elektronischen Recheneinheit Sensoren zur Messung der Fahrzeugbeschleunigungen vorgesehen sind, deren Signale bei Überschreiten vorbestimmter Schwellen- oder Grenzwerte für die Fahrzeugbeschleunigungen die erneute Erfassung der ersten und/oder zweiten Messgrößen sowie deren Abspeicherung und den Vergleich auslösen.

7. Verfahren nach einem der Ansprüche 1 bis 6, bei dem die zentrale elektronische Recheneinheit (2) in einer Überwachungseinrichtung im Fahrzeug angeordnet ist, vorzugsweise im Führerstand oder Führerhaus (1) und im Sichtfeld eines Fahrzeugführers.

## Claims

1. Method for monitoring the loading position and the bearing force of an item (6) to be transported on a loading surface in or on a vehicle, wherein the item to be transported is secured by tensioning means (3), preferably tensioning belts, on the loading surface, **characterized in that**
- on the loading surface there is provided a mat or substrate (5) comprising a plurality of two-dimensionally positionally accurately determinable sensors for detecting a first measurement variable which correlates with the bearing force acting on the mat,
- **in that** the sensors interact with devices for communicating, preferably wirelessly communicating, the first measurement variables to a central electronic computing unit (2), in which the starting and output values of the first measurement variables and their initial correlation with one another are stored,
wherein afterwards at time intervals the first measurement variables are repeatedly detected again and stored, wherein the respective current first positionally accurately determinable measurement variables are compared with their starting and output values and also their current correlation with one another is compared with their initial correlation with one another and, if predefined threshold or difference values are exceeded, an alarm is triggered.

2. Method according to Claim 1, wherein the sensors for detecting the first measurement variable are configured as individual pressure or force sensors distributed in the area of the mat (5), preferably as capacitive or resistive sensors.

3. Method according to Claim 1, wherein the sensors for detecting the first measurement variable are configured as individual piezoelectric sensors distributed in the area of the mat (5).

4. Method according to any of Claims 1 to 3, wherein the tensioning means (3) acting on the item to be transported likewise comprise sensor devices (4), the sensors of which, after the item to be transported has been secured, detect a second measurement variable which correlates with the tensioning force of the respective tensioning means, wherein the sensors and sensor devices interact with devices for communicating, preferably wirelessly communicating, the measurement variables to a central electronic computing unit (2), in which the starting and output values of the second measurement variables and their initial correlation with one another and also with the first measurement variables are stored, wherein afterwards at time intervals the first and second measurement variables are repeatedly detected again and stored, wherein the respective current first and second measurement variables are compared with their starting and output values and also with regard to their initial correlation with one another and, if predefined threshold or difference values are exceeded, an alarm is triggered.

5. Method according to Claim 4, wherein the sensors for detecting the second measurement variable are configured as resistive sensors provided in or on the tensioning means (3), preferably as strain gauges.

6. Method according to any of Claims 1 to 5, wherein sensors for measuring the vehicle accelerations are provided in the central electronic computing unit, the signals of which sensors, if predetermined threshold or limit values for the vehicle accelerations are exceeded, trigger the renewed detection of the first and/or second measurement variables and also the storage thereof and the comparison.

7. Method according to any of Claims 1 to 6, wherein the central electronic computing unit (2) is arranged in a monitoring device in the vehicle, preferably in the driver's compartment or driver's cab (1) and in the field of view of a vehicle driver.

## Revendications

1. Procédé de surveillance de la position de chargement et de la force d'appui d'un produit à transporter (6) sur une surface de chargement ou sur un véhicule, le produit à transporter étant amarré avec des moyens de haubanage (3), de préférence des sangles d'amarrage sur la surface de chargement, **caractérisé en ce que**
- une natte ou une semelle (5) est présente sur la surface de chargement, laquelle possède une pluralité de capteurs à détermination bidimensionnelle précise de la position destinés à acquérir une première grandeur de mesure, laquelle est corrélée avec la force d'appui agissant sur la natte,
- **en ce que** les capteurs coopèrent avec des dispositifs servant à la transmission, de préférence à la transmission sans fil des premières grandeurs de mesure à une unité de calcul (2) électronique centrale, dans laquelle sont mémorisées les valeurs de départ et initiales des premières grandeurs de mesure et leur corrélation initiale entre elles,
les premières grandeurs de mesure étant ensuite de nouveau acquises et mémorisées de manière répétée à des intervalles dans le temps, les premières grandeurs de mesure à détermination précise de la position respectivement actuelles étant comparées avec leurs valeurs de départ et initiales ainsi que leur corrélation actuelle entre elles avec leur corrélation initiale entre elles et une alarme étant déclenchée en cas de dépassement de valeurs de seuil ou de différence prédéfinies.

2. Procédé selon la revendication 1, avec lequel les capteurs destinés à acquérir la première grandeur de mesure sont réalisés sous la forme de capteurs de pression ou de force individuels distribués dans la surface de la natte (5), de préférence sous la forme de capteurs capacitifs ou résistifs.

3. Procédé selon la revendication 1, avec lequel les capteurs destinés à acquérir la première grandeur de mesure sont réalisés sous la forme de capteurs piézoélectriques individuels distribués dans la surface de la natte (5).

4. Procédé selon l'une des revendications 1 à 3, avec lequel les moyens de haubanage (3) agissant sur le produit à transporter possèdent eux aussi des dispositifs capteurs (4), dont les capteurs acquièrent une deuxième grandeur de mesure après l'amarrage du produit à transporter, laquelle est corrélée avec la force de serrage du moyen de haubanage respectif, les capteurs et les dispositifs capteurs coopérant avec des dispositifs servant à la transmission, de préférence à la transmission sans fil des grandeurs de mesure à l'unité de calcul (2) électronique centrale, dans laquelle sont mémorisées les valeurs de départ et initiales des deuxièmes grandeurs de mesure et leur corrélation initiale entre elles ainsi qu'avec les premières grandeurs de mesure, les premières et les deuxièmes grandeurs de mesure étant ensuite de nouveau acquises et mémorisées de manière répétée à des intervalles dans le temps, les premières et deuxièmes grandeurs de mesure respectivement actuelles étant comparées avec leurs valeurs de départ et initiales ainsi qu'en référence à leur corrélation initiale entre elles et une alarme étant déclenchée en cas de dépassement de valeurs de seuil ou de différence prédéfinies.

5. Procédé selon la revendication 4, avec lequel les capteurs destinés à acquérir la deuxième grandeur de mesure sont réalisés sous la forme de capteurs résistifs présents dans ou sur les moyens de haubanage (3), de préférence sous la forme de jauges de contrainte.

6. Procédé selon l'une des revendications 1 à 5, avec lequel des capteurs destinés à mesurer les accélérations du véhicule sont présents dans l'unité de calcul électronique centrale, dont les signaux déclenchent, en cas de dépassement de valeurs de seuil ou limites prédéterminées pour les accélérations du véhicule, déclenchent la nouvelle acquisition des premières et/ou deuxièmes valeurs mesurées ainsi que leur mémorisation et la comparaison.

7. Procédé selon l'une des revendications 1 à 6, avec lequel l'unité de calcul (2) électronique centrale est disposée dans un dispositif de surveillance dans le véhicule, de préférence dans le poste de conduite ou la cabine de conduite (1) et dans le champ de vision d'un conducteur de véhicule.
